Europäisches Patentamt

**European Patent Office**

**Office européen des brevets**

(19)

(11) Veröffentlichungsnummer: **0 203 059**
**B1**

(12) **EUROPÄISCHE PATENTSCHRIFT**

(45) Veröffentlichungstag der Patentschrift:
13.09.89

(51) Int. Cl.⁴: **F26B 3/08, F26B 25/00**

(21) Anmeldenummer: **86890145.5**

(22) Anmeldetag: **20.05.86**

(54) **Verfahren zur Trocknung von körnigen Feststoffen und Wirbelbetttrockner.**

(30) Priorität: **22.05.85 AT 1538/85**

(43) Veröffentlichungstag der Anmeldung:
**26.11.86 Patentblatt 86/48**

(45) Bekanntmachung des Hinweises auf die Patenterteilung:
**13.09.89 Patentblatt 89/37**

(84) Benannte Vertragsstaaten:
**BE CH DE FR GB IT LI LU NL SE**

(56) Entgegenhaltungen:
**EP-A- 0 066 095**
**DE-A- 2 734 198**
**DE-A- 3 118 931**
**DE-C- 437 715**
**DE-C- 2 734 198**
**FR-A- 1 161 753**
**FR-A- 2 425 043**
**GB-A- 655 063**
**GB-A- 2 132 323**

(73) Patentinhaber: **WAAGNER-BIRO
AKTIENGESELLSCHAFT,
Stadlauer-Strasse 54 Postfach 11, A-1221 Wien(AT)**

(72) Erfinder: **Beckmann, Georg, Dr.Dipl.-Ing.,
Jacquingasse 55/10, A-1030 Wien(AT)**
Erfinder: **Wolf, Bodo, Dr.-Ing., Forstweg 9,
DD-8210 Freital(DD)**
Erfinder: **Möller, Burkhard, Dr.-Ing.,
Feuerbachstrasse 20, DD-8020 Dresden(DD)**

(74) Vertreter: **Wallner, Gerhard, Dipl.-Ing., Waagner-Biro
Aktiengesellschaft Patentreferat Postfach 11,
A-1221 Wien(AT)**

**Beschreibung**

Die Erfindung betrifft ein Verfahren zur Trocknung von körnigen Feststoffen, insbesondere von Kohle, in einem durch Heizflächen beheizten Wirbelbett, bei dem das abströmende Fluidisierungsmedium, welches hauptsächlich aus Wasserdampf besteht, nach einer Reinigung zumindest zum Teil erneut zur Fluidisierung herangezogen wird und ein anderer Teil aus dem Kreislauf entfernt und kondensiert wird und einem Mischkondensator zugeführt wird, in welchem unterkühltes, aus dem Mischkondensator abfließendes Kondensat zugeführt und gemeinsam mit dem entstehenden Kondensat nach einer Wärmeabfuhr abgeführt wird, und eine Vorrichtung zur Durchführung des Verfahrens.

Es ist aus der AT-PS 345 769 bekannt, Wirbelbetttrockner im Kreislauf zu fahren, wobei das Fluidisierungsmedium mehrfach durch das Wirbelbett geführt wird. In diesem Fall wird für den Wärmeeintrag in den Trockner das Fluidisierungsmedium mit einer Übertemperatur in den Trockner eingeblasen, und die Rezirkulation des Fluidisierungsmediums erfolgt hauptsächlich im Hinblick auf die Ausnützung der Übertemperatur. Dieses Verfahren hat aber den thermodynamischen Nachteil, daß mit dem bei der Trocknung entstehenden Überschuß am Fluidisierungsmedium auch ein großer Teil der Wärme verloren geht. Ein weiteres Problem ist in den Umweltschutzauflagen zu suchen, da das Überschußmedium doch Stäube nach außen trägt bzw. bei Niederschlagung derselben die abfließende Flüssigkeit nicht biologisch einwandfrei ist. Die biologische Reinigung von sogenannten Brüdenkondensaten stellt ein gewisses Problem dar. Aus der DE-A 3 118 931 ist es ferner bekannt, das überschüssige kondensierbare Fluidisierungsmedium in einem Mischkondensator in einer Zweigleitung niederzuschlagen, wobei als Kühlflüssigkeit abgekühltes Kondensat des Mischkondensates verwendet wird und das ablaufende Kondensat unterkühlt wird. Die Erfindung hat es sich zur Aufgabe gemacht, den oben angeführten Problemkreis zu entschärfen und zumindest den Wärmeverlust zu reduzieren. Ein weiterer Vorteil dieser Erfindung wird darin gesehen, daß sie es auch ermöglicht, die anfallenden Kondensatmengen durch Entspannungsverdampfung zu reduzieren und den anfallenden reinen Dampf in einen Wärmeverbraucher einzubinden, so daß einerseits die Wärmeverluste geringer werden und andererseits die zu entsorgende Kondensatmenge bedeutend reduziert werden kann. Dies letztere erlaubt infolge der Erhöhung der Konzentration eine Gewinnung der im Kondensat gelösten Stäube, so daß sie bei Kohletrocknungsanlagen z.B. als Zusatzbrennstoff verwendet werden können.

Das erfindungsgemäße Verfahren ist dadurch gekennzeichnet, daß ein erster Teil von aus dem Kreislauf entnommenem zu kondensierendem Dampf vor einem Kreislaufgebläse entnommen und einem ersten Mischkondensator zugeführt wird und ein zweiter Teil nach dem Kreislaufgebläse entnommen und einem zweiten Mischkondensator zugeführt wird, in dem infolge des höheren Dampfdruckes eine Kondensattemperatur von über 100°C erreicht wird, und daß das Kondensat des ersten Mischkondensators dem zweiten Mischkondensator zugeführt und das Kondensat des zweiten Mischkondensators nach einer Wärmeabfuhr zum Teil dem ersten Mischkondensator zugeführt und zum restlichen Teil zur Entsorgung abgeführt wird. Insbesondere wird das Kondensat zur Wärmeabfuhr einem Entspannungsdampferzeuger zugeführt.

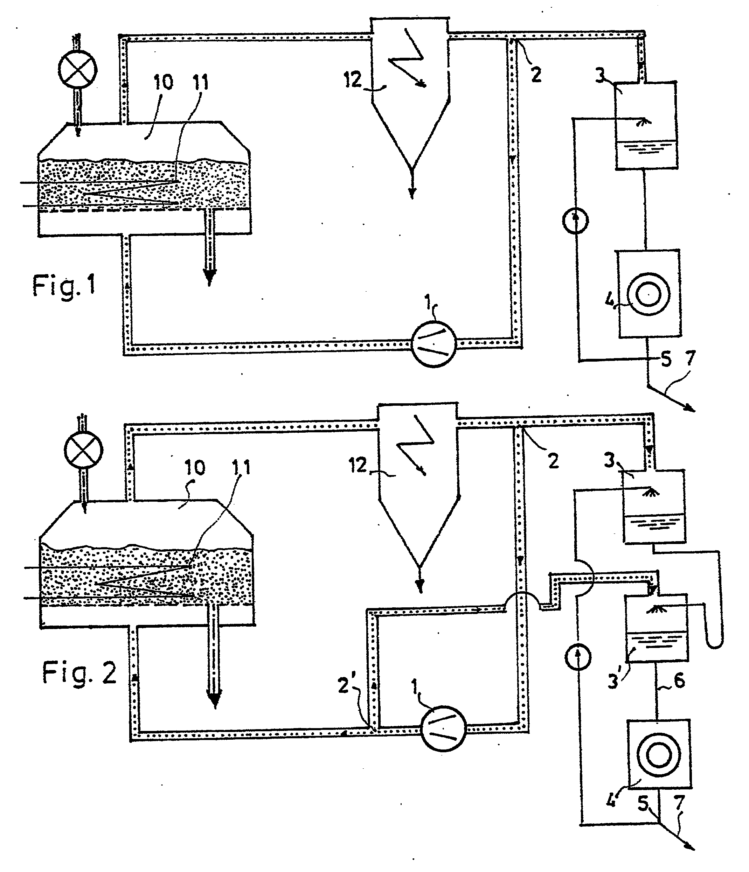

Die erfindungsgemäße Vorrichtung zur Durchführung des Verfahrens mit einem Wirbelbetttrockner, einer an diesen angeschlossenen Leitung zur Zufuhr und einer weiteren Leitung zur Abfuhr des Fluidisierungsmediums, einem die Leitungen verbindenden Kreislaufgebläse, wobei vor dem Kreislaufgebläse eine erste Abzweigung zu einem ersten Mischkondensator vorgesehen ist, an dem wasserseitig ein Wärmeverbraucher nachgeschaltet ist, von dessen Abströmleitung eine Abzweigung zum ersten Mischkondensator angeordnet ist, ist dadurch gekennzeichnet, daß die Vorrichtung nach dem Kreislaufgebläse eine zweite Abzweigung aufweist, die zu einem zweiten Mischkondensator führt, dessen zugeführte Wassermenge die Ablaufmenge des ersten Mischkondensators ist und dessen Ablauf zum Wärmeverbraucher geführt ist. Die Erfindung wird an Hand der angeschlossenen Fig. 1 und 2 beispielsweise dargestellt.

Fig. 1 offenbart einen bekannten Trocknungskreislauf, bei dem das Kondensat etwa mit Atmosphärendruck und einer Temperatur von knapp unter 100°C anfällt. Fig. 2 offenbart ein erfindungsgemäßes Schaltbild mit einem zweistufigen Mischkondensator, bei dem das Kondensat mit geringem Überdruck gegenüber der Atmosphäre, also mit etwa 1,2 bar und etwa 105° C, anfällt.

Das Schaltbild in Fig. 1 offenbart einen Fließbetttrockner 10, bei dem das Fluidisierungsmedium über das Kreislaufgebläse 1 in das Fließbett eingeblasen und die Beheizung des Fließbettes über Heizflächen 11 indirekt an das zu trocknende Gut erfolgt. Das aus dem Fließbett 10 austretende Fluid beinhaltet das im Trockner verdampfte Wasser sowie mitgerissene Stäube, die in einem Trockenabscheider 12 wie z.B. Elektro-Filter mit hohem Wirkungsgrad abgeschieden werden. Das gereinigte Fluidisierungsmedium strömt durch eine Abzweigung 2 teilweise zurück zum Kreislaufgebläse 1 und zum anderen Teil zu einem Mischkondensator 3 oder Einspritzkondensator , in dem die Dämpfe kondensiert werden. Das etwa 100-grädige Kondensat strömt nun zu einem Wärmeverbraucher 4, der als Wärmetauscher oder auch als Entspannungsverdampfer ausgebildet werden kann. Das vom Wärmeverbraucher 4 abströmende abgekühlte Kondensat wird nun teilweise über die Abzweigung 5 in den Mischkondensator 3 rückgeführt und zum anderen Teil (Ablauf 7) einer nicht dargestellten Kläranlage zugeführt. Bei der Ausbildung des Wärmeverbrauchers als Entspannungsverdampfer wird die Flüssigkeitsmenge durch den erzeugten Dampf weitgehend reduziert, so daß im Ablauf 7 praktisch nur eingedicktes Kondensat als Abschlämm-Menge abgeführt wird. Der erzeugte Niederdruckdampf ist relativ rein und meist als Heizdampf mit allerdings reinem Kondensat verwertbar. Fig. 2 offenbart ein ähnliches Schaltbild, bei dem jedoch thermodynamisch besser verwertbares Heißwasser als Kondensat anfällt, indem der Druckunterschied zwischen der Saug- und Druck-seite des Kreislaufgebläses genützt wird, damit das erzeugte Kondensat bei höherem Druck anfällt. Zu diesem Zweck ist nach dem Kreislaufgebläse 1 eine Abzweigung 2' vorgesehen, durch welche Wasserdampf mit etwa 1,2 bar dem Mischkondensator 3' zugeführt wird und bei dem auch die Einspritzflüssigkeit aus dem Kondensator 3 einem höheren Druck aufweist und daher zweckentsprechend der Kondensator 3 höher als der Mischkondensator 3' angeordnet ist, so daß das aus dem Mischkondensator 3 ablaufende Kondensat an der Austrittsstelle im Mischkondensator 3' etwa denselben Druck aufweist wie der zu kondensierende Dampf. Dadurch wird erreicht, daß in Ablauf 6 Heißwasser mit höherem als atmosphärischem Druck dem Wärmeverbraucher 4 zugeführt wird, so daß die Wärmeverwertbarkeit verbessert wurde und eventuell zur Beheizung eines Entgasers eines Dampferzeugers verwendet werden kann. Naturgemäß kann das im Ablauf 7 abströmende noch warme, aber verschmutzte Wasser beispielsweise in einer Heizanlage noch weiter abgekühlt werden. Je wärmer und je höher der Druck des in den Wärmeverbraucher 4 eintretenden Heißwassers ist, dest mehr Entspannungsdampf läßt sich erzeugen und desto geringer ist die ablaufende und zu reinigende Heißwassermenge.

Ein wesentlicher Anwendungsbereich der Erfindung wird bei der Trocknung von Kohle gesehen, die beispielsweise 50 % Feuchtigkeit enthalten kann, so daß nicht nur der Heizwert erhöht, sondern auch die Transportkosten durch das verringerte Transportgewicht bedeutend reduziert werden können. Bei der Koppelung der Trocknungsanlage mit einem Dampfkessel, der mit der getrockneten Kohle befeuert wird, reduziert sich der Abgasverlust im Dampferzeuger bedeutend, da das Rauchgasvolumen um die in der Kohle enthaltene verdampfte Feuchtigkeitsmenge verringert wird und gleichzeitig die an den Kamin abgegebene Wärmemenge vermindert wird.

Die Mischkondensatoren, durch die der zu kondensierende Teilstrom des Fluidisierungsmediums geführt wird, haben den Zweck, daß auf möglichst raschem Weg eine Niederschlagung des Dampfes erfolgt, wobei auch mitgeführte Staubpartikeln als Kondensatskeime ausgewaschen werden. Durch die Rezirkulation des unterkühlten Kondensates wird einerseits die benötigte Kühlwassermenge reduziert und andererseits bei der Zwischenschaltung von Entspannungsdampferzeugern auch eine Eindickung des Kondensates erreicht, so daß die zu entsorgende Kondensatmenge reduziert wird. Der im Entspannungsdampferzeuger erzeugte Wasserdampf kann einerseits zu Heizzwecken oder, da es sich um reinen Wasserdampf handelt, auch direkt in die Atmosphäre abgegeben werden. Sinn und Zweck der erfindung ist die Minimierung des benötigten Energieaufwandes sowohl für die Trocknung als auch für die umweltfreundliche Beseitigung des notwendigerweise anfallenden ungereinigten Brüdenkondensates.

Die Mischkondensatoren können im Rahmen der Erfindung auch als Oberflächenkondensatoren ausgebildet werden, wobei ein Teil des ablaufenden Kondensates mit dem eintretenden Dampf zur Mischkondensation gebracht wird und die Kühlflächen ständig feucht gehalten werden.

**Patentansprüche**

1. Verfahren zur Trocknung von körnigen Feststoffen, insbesondere von Kohle, in einem durch Heizflächen beheizten Wirbelbett, bei dem das abströmende Fluidisierungsmedium, welches hauptsächlich aus Wasser besteht, nach einer Reinigung zumindest zum Teil erneut zur Fluidisierung herangezogen wird und ein anderer Teil aus dem Kreislauf entfernt und kondensiert wird, wobei ein erster Teil von aus dem Kreislauf entnommenem zu kondensierendem Dampf vor einem Kreislaufgebläse entnommen und einem ersten Mischkondensator zugeführt wird und ein zweiter Teil nach dem Kreislaufgebläse entnommen und einem zweiten Mischkondensator zugeführt wird, in dem infolge des höheren Dampfdruckes eine Kondensattemperatur von über 100°C erreicht wird, und wobei das Kondensat des ersten Mischkondensators dem zweiten Mischkondensator zugeführt und das Kondensat des zweiten Mischkondensators nach der Wärmeabfuhr zum Teil dem ersten Mischkondensator zugeführt und zum restlichen Teil zur Entsorgung abgeführt wird.

2. Verfahren nach Anspruch 1, dadurch gekennzeichnet, daß das Kondensat zur Wärmeabfuhr einem Entspannungsdampferzeuger zugeführt wird.

3. Vorrichtung zur Durchführung des Verfahrens nach Anspruch 1 oder 2, mit einem Wirbelbetttrockner, einer an diesen angeschlossenen Leitung zur Zufuhr und einer weiteren Leitung zur Abfuhr des Fluidisierungsmediums, einem die Leitungen verbindenden Kreislaufgebläse, wobei vor dem Kreislaufgebläse (1) eine erste Abzweigung (2) zu einem ersten Mischkondensator (3) vorgesehen ist, an dem wasserseitig ein Wärmeverbraucher (4) nachgeschaltet ist, von dessen Abströmleitung eine Abzweigung (5) zum ersten Mischkondensator (3) angeordnet ist, dadurch gekennzeichnet, daß die Vorrichtung nach dem Kreislaufgebläse (1) eine zweite Abzweigung (2') aufweist, die zu einem zweiten Mischkondensator (3') führt, dessen zugeführte Wassermenge die Ablaufmenge des ersten Mischkondensators (3) ist und dessen Ablauf (6) zum Wärmeverbraucher (4) geführt ist.

4. Vorrichtung nach Anspruch 3, dadurch gekennzeichnet, daß der Wärmeverbraucher (4) als mehrstufiger Entspannungsdampferzeuger ausgebildet ist, dessen Dampfleitung des ersten Entspannungsdampfes in einen Speisewasserentgaser einer Speisewasserkette eines Dampferzeugers mündet.

5. Vorrichtung nach Anspruch 3, dadurch gekennzeichnet, daß der Wärmeverbraucher (4) als Wärmetauscher einer Speisewasservorwärmanlage ausgebildet ist.

## Claims

1. Process for drying granular material, in particular coal, in a fluidized bed heated by heating surfaces, whereby the discharged fluidizing agent mainly consisting of water after its cleaning is at least partially reused for fluidization and another part is withdrawn from the circuit in order to be condensed is withdrawn upstream of a circuit fan and led to a first mixing condenser and another part is withdrawn downstream of the circuit fan and led to a second mixing condenser generating a condensate temperature of more than 100°C due to higher steam pressure and the condensate of the first mixing condenser is led to the second mixing condenser and the condensate of the second mixing condenser after heat emission is partly led to the first mixing condenser and the remaining part is discharged for further disposal.

2. Process according to claim 1, characterized in that the condensate is led to a flash evaporator in order to eliminate heat.

3. Equipment for carrying out the process according to claim 1 or 2 with a fluidized-bed drier, a connected line for supply and another line for discharge of the fluidizing agent, a circuit fan connecting the lines, whereby upstream of the circuit fan (1) a first branching (2) has been provided leading to a first mixing condenser (3), downstream of which a heat consumer (4) has been installed on the water side, from the discharge line of which a branching (5) has been provided leading to the first mixing condenser (3), characterized in that the equipment downstream of the circuit fan (1) has been provided with a second branching (2') leading to a second mixing condenser (3'), the water quantity being supplied to this mixing condenser being the discharged quantity of the first mixing condenser (3) and its discharge (6) being led to the heat consumer (4).

4. Equipment according to claim 3, characterized in that the heat consumer (4) is constructed as multistage flash evaporator whose steam line of the first flash-off steam ends in a feed water deaerator of a feed water chain of a steam generating plant.

5. Equipment according to claim 3, characterized in that the heat consumer (4) is constructed as heat exchanger of a feed water heating plant.

## Revendications

1. Procédé de séchage d'une matière granuleuse, particulièrement du charbon, en lit fluidisé chauffé par des surfaces de chauffe suivant lequel l'agent de fluidisation déchargé qui consiste surtout d'eau après purification est réutilisé au moins partiellement pour la fluidisation et une autre partie est éliminée du circuit et condensée, une première partie de vapeur soutirée au circuit pour être condensée étant soutirée avant le ventilateur du circuit et amenée à un premier condenseur à mélange et une seconde partie étant soutirée après le ventilateur du circuit et amenée à un second condenseur à mélange lequel atteint une température de condensat de plus de 100°C due à la pression de vapeur augmentée, et le condensat du premier condenseur à mélange étant amené au second condenseur à mélange et le condensat du second condenseur à mélange après émission de chaleur étant partiellement amené au premier condenseur à mélange et le reste étant déchargé pour être mis au dépôt.

2. Procédé suivant revendication 1, caractérisé en ce que le condensat est amené à un vaporiseur de vapeur détendue pour enlever la chaleur.

3. Dispositif pour l'exécution du procédé suivant revendication 1 ou 2, avec un séchoir à lit fluidisé, une conduite connectée pour l'alimentation et une autre conduite pour la décharge de l'agent de fluidisation, un ventilateur de circuit connectant les conduites, une première bifurcation (2) menant à un premier condenseur à mélange (3) étant prévue avant le ventilateur de circuit (1), un consommateur de chaleur (4) étant connecté après le condenseur à mélange (3) du côté de l'eau, une bifurcation (5) de la conduite de décharge du consommateur de chaleur (4) menant au premier condenseur à mélange (3), caractérisé en ce que le dispositif présente une deuxième bifurcation (2') après le ventilateur de circuit (1) menant à un second condenseur à mélange (3'), la quantité d'eau menée à ce condenseur étant la quantité déchargée du premier condenseur à mélange (3), sa décharge (6) menant au consommateur de chaleur (4).

4. Dispositif suivant revendication 3, caractérisé en ce que le consommateur de chaleur (4) est construit comme vaporiseur de vapeur détendue à plusieurs étages dont la conduite de vapeur de la première vapeur détendue mène à un dégazeur d'eau d'alimentation d'une chaîne d'alimentation d'un générateur de vapeur.

5. Dispositif suivant revendication 3, caractérisé en ce que le consommateur de chaleur (4) est construit comme échangeur de chaleur d'une installation de réchauffage d'eau d'alimentation.

EP 0 203 059 B1

Fig. 1

Fig. 2